# EUROPÄISCHE PATENTSCHRIFT

(11) **EP 3 682 092 B1**
(45) Veröffentlichungstag und Bekanntmachung des Hinweises auf die Patenterteilung: **27.10.2021**
(21) Anmeldenummer: 18766199.6
(22) Anmeldetag: 05.09.2018
(51) Int. Cl.: F01D 25/30

(54) **ABGASTURBINE MIT DIFFUSOR**
EXHAUST GAS TURBINE WITH A DIFFUSSER
TURBINE À GAZ D'ÉCHAPPEMENT AVEC DIFFUSEUR

(30) Priorität: 14.09.2017 DE 102017121337
(43) Veröffentlichungstag der Anmeldung: 22.07.2020
(73) Patentinhaber: ABB Schweiz AG, 5400 Baden (CH)
(72) Erfinder: SENN, Stephan, 5236 Remingen (CH); MATHEY, Christoph, 5442 Fislisbach (CH)
(74) Vertreter: Zimmermann & Partner Patentanwälte mbB
(86) Internationale Anmeldenummer: PCT/EP2018/073871
(87) Internationale Veröffentlichungsnummer: WO 2019/052874

(56) Entgegenhaltungen:
- EP-A2- 1 178 183
- WO-A2-2013/037437

## Beschreibung

### TECHNISCHES GEBIET

Die Erfindung bezieht sich auf das Gebiet der Abgasturbolader für aufgeladene Brennkraftmaschinen. Insbesondere betrifft die Erfindung einen axialen Diffusor einer Abgasturbine eines Abgasturboladers.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Bei aus dem Stand der Technik bekannten Abgasturbinen von Abgasturboladern wird die Druckrückgewinnung am Abgasturbinenausgang typischerweise mittels Diffusoren realisiert, die beispielsweise ringförmig und auf gerade Weise konisch ausgebildet sein können. Ferner ist typischerweise zur Verbesserung der Druckrückgewinnung an der Nabe des Turbinenrads ein sich nicht drehendes, kegelartiges Bauelement angebracht.

Es hat sich herausgestellt, dass bei derartigen aus dem Stand der Technik bekannten Diffusoren von Abgasturbinen die Druckrückgewinnung noch verbesserungswürdig ist. Ferner hat sich herausgestellt, dass die konventionellen Diffusoren gewisse Nachteile hinsichtlich Komplexität, Bauraumgröße, und Kosten aufweisen. Ein solcher Diffusor ist aus WO2013/037437 bekannt.

### KURZE DARSTELLUNG DER ERFINDUNG

Die Aufgabe der vorliegenden Erfindung besteht darin, eine Abgasturbine mit einem Diffusor bereitzustellen, der gegenüber den aus dem Stand der Technik bekannten Abgasdiffusoren verbessert ist. Insbesondere besteht die Aufgabe der vorliegenden Erfindung darin, eine Abgasturbine mit einem Diffusor bereitzustellen, der eine geringere Komplexität und eine verbesserte Druckrückgewinnung aufweist.

Zur Lösung der obengenannten Aufgabe wird eine Abgasturbine gemäß dem unabhängigen Anspruch 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Abgasturbine bereitgestellt. Die Abgasturbine umfasst ein Turbinenrad mit einer Vielzahl von Laufschaufeln und einen Abgasaustrittskanal. Der Abgasaustrittskanal ist stromabwärts der Laufschaufeln des Turbinenrades angeordnet. Der Abgasaustrittskanal ist radial außen durch einen axialen Turbinendiffusor und radial innen, zumindest teilweise durch einen Spinner begrenzt. Der axiale Turbinendiffusor ist aus einer Anzahl N>1 von aufeinander folgenden konischen Diffusor-Segmenten ausgebildet. Ein axialer Diffusor-Öffnungswinkel A zwischen aufeinander folgenden Diffusor-Segmenten beträgt A≥1,0°. Ein Verhältnis L/H zwischen einer axialen Diffusor-Segmentlänge L und einer Eintrittshöhe H des Abgasaustrittskanals beträgt L/H≥0,01. Ein Verhältnis H/S zwischen der Eintrittshöhe H des Abgasaustrittskanals und einem maximalen Radius S des Spinners beträgt H/S≥1,0. Der Spinner ist aus einer Anzahl P>1 von aufeinander folgenden konischen Spinner-Segmenten ausgebildet. Ein axialer Spinner-Öffnungswinkel B zwischen aufeinander folgenden Spinner-Segmenten beträgt B≥1,0°. Ein Verhältnis M/H zwischen einer axialen Spinner-Segmentlänge M und der Eintrittshöhe H des Abgasaustrittskanals beträgt M/H≥0,01.

Somit wird vorteilhafterweise eine Abgasturbine mit einem Diffusor bereitgestellt, die gegenüber den aus dem Stand der Technik bekannten Abgasturbinen verbessert ist. Insbesondere wird durch die erfindungsgemäße Abgasturbine eine Abgasturbine mit einem verbesserten Diffusordesign bereitgestellt, welches eine verbesserte Druckrückgewinnung am Abgasturbinenausgang ermöglicht. Des Weiteren wird ein Diffusor für eine Abgasturbine bereitgestellt, der eine geringe Komplexität sowie geringe Bauraumgrösse aufweist, wodurch die Herstellungskosten vorteilhafterweise geringer ausfallen.

Gemäß einem weiteren Aspekt der Erfindung wird ein Abgasturbolader mit einer Abgasturbine gemäß einer der hierin beschriebenen Ausführungsformen bereitgestellt, so dass vorteilhafterweise ein verbesserter Abgasturbolader bereitgestellt werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische longitudinale Schnittansicht eines Teilbereichs einer Abgasturbine gemäß hierin beschriebenen Ausführungsformen;
- Figur 2: eine schematische Schnittansicht eines Abgasaustrittskanals einer Abgasturbine gemäß hierin beschriebenen Ausführungsformen;
- Figur 3: eine schematische Schnittansicht eines Abgasaustrittskanals einer Abgasturbine gemäß weiteren hierin beschriebenen Ausführungsformen; und
- Figur 4: eine detaillierte Schnittansicht eines Spinners einer Abgasturbine gemäß hierin beschriebenen Ausführungsformen.

### DETAILLIERTE BESCHREIBUNG DER FIGUREN

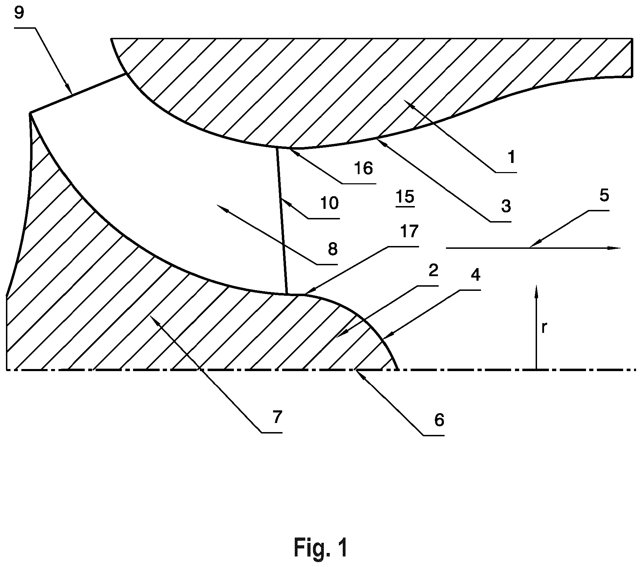

Figur 1 zeigt eine schematische longitudinale Schnittansicht eines Teilbereichs einer Abgasturbine gemäß hierin beschriebenen Ausführungsformen.

Insbesondere zeigt Figur 1 ein Turbinenrad 7 mit einer axialen Rotationsachse 6, um welche das Turbinenrad drehbar gelagert ist. Das Turbinenrad 7 weist typischerweise eine Vielzahl von Laufschaufeln 8 auf, wobei in dem in Figur 1 dargestellten Ausschnitt beispielhaft nur eine Laufschaufel 8 gezeigt ist. Das hierin beschriebene Diffusorkonzept kann auf Mixed-Flow Turbinen, Radialturbinen und Axialturbinen angewendet werden, ist jedoch nicht auf Mixed-Flow Turbinen, Radialturbinen und Axialturbinen beschränkt.

Die Laufschaufeln 8 des Turbinenrads 7 umfassen typischerweise eine Vorderkante 9 und eine Hinterkante 10. In diesem Zusammenhang sei angemerkt, dass die Vorderkante 9 der Laufschaufeln 8 diejenige Kante der Laufschaufeln ist, auf welche das Abgas bei Betrieb der Abgasturbine zuströmt. Die Hinterkante 10 der Laufschaufeln 8 ist diejenige Kante der Laufschaufeln, von welchen das Abgas bei Betrieb der Abgasturbine abströmt. Die Strömungsrichtung 5 des Abgases ist in Figur 1 mit einem Pfeil eingezeichnet.

Wie beispielhaft in Figur 1 gezeigt ist, umfasst die erfindungsgemäße Abgasturbine einen Abgasaustrittskanal 15, welcher stromabwärts der Laufschaufeln 8 des Turbinenrades 7 angeordnet ist. Der Abgasaustrittskanal 15 ist radial außen durch einen axialen Turbinendiffusor 1 begrenzt. Ferner ist der Abgasaustrittskanal 15 radial innen, zumindest teilweise durch einen Spinner 2 begrenzt. Gemäß einer Ausführungsform, die mit anderen hierin beschriebenen Ausführungsformen kombiniert werden kann, ist der axiale Turbinendiffusor 1 statisch (nicht drehend) ausgeführt. Ferner kann der Spinner 2 rotierbar ausgeführt sein.

Wie beispielhaft in Figur 1 dargestellt ist, umfasst der Turbinendiffusor 1 typischerweise eine radial nach Innen gerichtete Diffusor-Kontur 3. Wie aus Figur 1 hervorgeht stellt die radial nach Innen gerichtete Diffusor-Kontur 3 die radial äußere Begrenzung des Abgasaustrittskanals 15 dar. Der Spinner umfasst typischerweise eine radial nach Außen gerichtete Spinner-Kontur 4. Wie aus Figur 1 hervorgeht stellt die radial nach Außen gerichtete Spinner-Kontur 4 die radial innere Begrenzung des Abgasaustrittskanals 15 dar. Die radiale Richtung ist in den Figuren 1-3 beispielhaft durch den Pfeil r dargestellt. "Radial nach Innen gerichtet" bedeutet zur Rotationsachse 6 bzw. Symmetrieachse des Abgasaustrittskanals hin gerichtet. "Radial nach Außen gerichtet" bedeutet von der Rotationsachse 6 bzw. Symmetrieachse des Abgasaustrittskanals weg gerichtet.

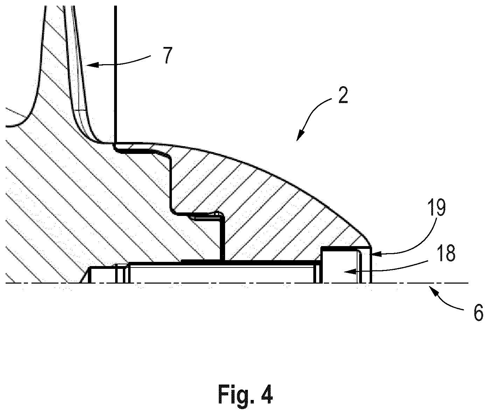

Gemäß einer Ausführungsform, die mit anderen hierin beschriebenen Ausführungsformen kombiniert werden kann, kann der Spinner 2 als integrales Bauteil des Turbinenrads 7 ausgeführt sein, wie es beispielhaft in Figur 1 gezeigt ist. Mit anderen Worten, der Spinner kann integraler Bestandteil des Turbinenrades sein. Alternativ kann der Spinner 2 beispielsweise als separates Bauteil ausgeführt sein, welches mit dem Turbinenrad verbunden sein kann, wie es beispielhaft in Figur 4 dargestellt ist. Demnach kann sich der Spinner 2 im Betrieb der Abgasturbine mit dem Turbinenrad 7 mitdrehen, und dreht sich somit mit der gleichen Rotationsgeschwindigkeit wie das Turbinenrad.

In hierin beschriebenen Ausführungsformen, in welchen der Spinner als separates Bauteil ausgeführt ist, ist der Spinner 2 zentral mit dem Turbinenrad 7 verbunden. Mit anderen Worten der Spinner 2 ist mit dem Turbinenrad derart verbunden dass die Rotationsachse 6 sowie Symmetrieachse des Abgasaustrittskanals eine Symmetrieachse des Spinners darstellt, wie es beispielhaft in Figur gezeigt ist.

Gemäß einer Ausführungsform, die mit anderen hierin beschriebenen Ausführungsformen kombiniert werden kann, kann der Spinner 2 als separates Formteil ausgebildet sein, wie es beispielhaft in Figur 4 dargestellt ist. Beispielsweise kann der als separates Formteil ausgebildete Spinner ein separates Gussteil sein. Alternativ kann der als separates Formteil ausgebildete Spinner ein Tiefziehblechelement oder ein Drehteil sein.

Wie Beispielhaft in Figur 4 dargestellt ist kann der als separates Formteil ausgebildete Spinner 2 mittels eines Verbindungselements 18, beispielsweise einer Schraube, mit dem Turbinenrad 7 verbunden sein. Beispielsweise kann der Spinner 2 eine Versenkung 19 für das Verbindungselement 18 aufweisen

Gemäß einer alternativen Ausführungsform, die mit anderen hierin beschriebenen Ausführungsformen kombiniert werden kann, kann der als separates Formteil ausgebildete Spinner ein integriertes Innengewinde aufweisen und das Turbinenrad ein korrespondierendes Außengewinde und das Formteil mit dem integrierten Innengewinde auf das korrespondierende Außengewinde des Turbinenrades aufgeschraubt sein.

Alternativ, kann der als separates Formteil ausgebildete Spinner auf das Turbinenrad aufgeschrumpft sein. Gemäß einer weiteren Alternative kann der als separates Formteil ausgebildete Spinner mittels einer Schweißverbindung mit dem Turbinenrad verbunden sein. Ferner kann der als separates Formteil ausgebildete Spinner mittels einer Verstemmung oder mittels einer Rändelung mit dem Turbinenrad verbunden sein.

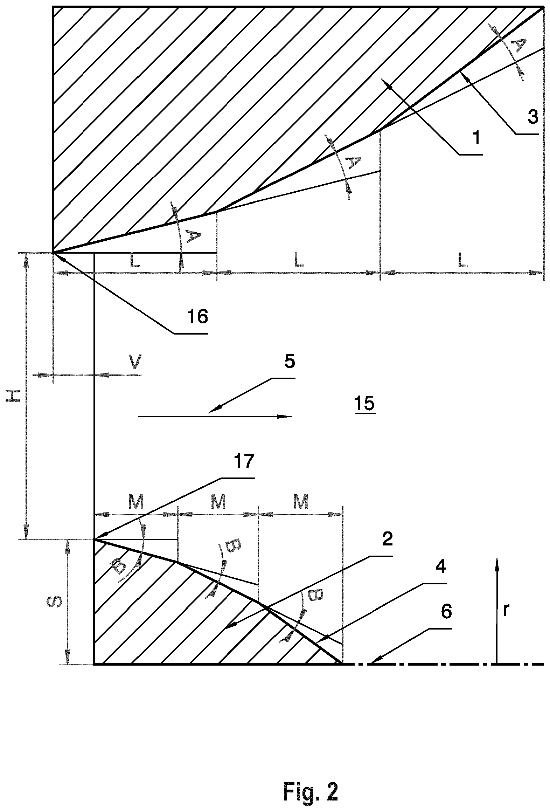

Zur genaueren Erläuterung der erfindungsgemäßen Abgasturbine ist in Figur 2 eine schematische Schnittansicht eines Abgasaustrittskanals 15 gemäß hierin beschriebenen Ausführungsformen dargestellt.

Insbesondere zeigt Figur 2 einen Abgasaustrittskanal 15, welcher stromabwärts der Laufschaufeln des Turbinenrades angeordnet ist. Der Abgasaustrittskanal 15 ist radial außen durch einen axialen Turbinendiffusor 1 begrenzt. Ferner ist der Abgasaustrittskanal 15 radial innen, zumindest teilweise durch einen Spinner 2 begrenzt.

Wie beispielhaft in Figur 2 dargestellt ist, ist der axiale Turbinendiffusor 1 aus einer Anzahl N>1 von aufeinander folgenden konischen Diffusor-Segmenten ausgebildet. In Figur 2 sind beispielhaft drei Diffusor-Segmente dargestellt, welche durch die gestrichelten Linien angedeutet sind. In diesem Zusammenhang sei darauf hingewiesen, dass die in Figur 2 dargestellte Ausführungsform mit drei Diffusor-Segmenten nicht als einschränkend zu verstehen ist, sondern dass prinzipiell eine beliebige Anzahl N von Diffusor-Segmenten größer dem Wert 1 (N>1) gewählt werden kann. Insbesondere kann die Anzahl N von Diffusor-Segmenten N ≥ 2 oder N ≥ 3 sein.

Ferner sind in Figur 2 axiale Diffusor-Öffnungswinkel A zwischen den aufeinander folgenden Diffusor-Segmenten dargestellt. Wie aus Figur 2 hervorgeht, ist unter dem axialen Diffusor-Öffnungswinkel A zwischen den aufeinander folgenden Diffusor-Segmenten derjenige Winkel zu verstehen, der sich am Übergang zwischen benachbarten Diffusor-Segmenten ergibt. Typischerweise beträgt ein axialer Diffusor-Öffnungswinkel A zwischen aufeinander folgenden Diffusor-Segmenten einen Wert von A≥1,0°, insbesondere A≥2,5°. Der Wert für die axialen Diffusor-Öffnungswinkel A zwischen benachbarten Diffusor-Segmenten kann konstant sein oder unterschiedliche Werte haben. Beispielsweise können die Werte des Diffusor-Öffnungswinkels A zwischen aufeinander folgenden Diffusor-Segmenten in Strömungsrichtung 5 zunehmen.

Wie beispielhaft in Figur 2 dargestellt ist, ist der Spinner 2 aus einer Anzahl P>1 von aufeinander folgenden konischen Spinner-Segmenten ausgebildet. In Figur 2 sind beispielhaft drei Spinner-Segmente dargestellt, welche durch die gestrichelten Linien angedeutet sind. In diesem Zusammenhang sei darauf hingewiesen, dass die in Figur 2 dargestellte Ausführungsform mit drei Spinner-Segmenten nicht als einschränkend zu verstehen ist, sondern dass prinzipiell eine beliebige Anzahl P von Spinner-Segmenten größer dem Wert 1 (P>1) gewählt werden kann. Insbesondere kann die Anzahl P von Spinner-Segmenten P≥2 oder P≥3 sein.

Ferner sind in Figur 2 axiale Spinner-Öffnungswinkel B zwischen den aufeinander folgenden Spinner-Segmenten dargestellt. Wie aus Figur 2 hervorgeht, ist unter dem axialen Spinner-Öffnungswinkel B zwischen den aufeinander folgenden Spinner-Segmenten derjenige Winkel zu verstehen der sich am Übergang zwischen benachbarten Spinner-Segmenten ergibt.

Typischerweise beträgt ein axialer Spinner-Öffnungswinkel B zwischen aufeinander folgenden Spinner-Segmenten einen Wert von B≥1,0°, insbesondere B≥2,5°. Der Wert für die axialen Spinner-Öffnungswinkel B zwischen benachbarten Spinner-Segmenten kann konstant sein oder unterschiedliche Werte haben. Beispielsweise können die Werte des Spinner-Öffnungswinkel B zwischen aufeinander folgenden Spinner-Segmenten in Strömungsrichtung 5 zunehmen.

Ferner sind in Figur 2 die axiale Diffusor-Segmentlänge L, die Eintrittshöhe H des Abgasaustrittskanals 15, der maximale Radius S des Spinners 2 und die axiale Spinner-Segmentlänge M eingezeichnet. In diesem Zusammenhang sei angemerkt, dass die axiale Diffusor-Segmentlänge L typischerweise konstant ist. Alternativ kann die axiale Diffusor-Segmentlänge L in Strömungsrichtung 5 zunehmen oder in Strömungsrichtung 5 abnehmen. Ebenso ist typischerweise die axiale Spinner-Segmentlänge M konstant. Alternativ kann die axiale Spinner-Segmentlänge M in Strömungsrichtung 5 zunehmen oder in Strömungsrichtung 5 abnehmen.

Ein Verhältnis L/H zwischen der axialen Diffusor-Segmentlänge L und der Eintrittshöhe H des Abgasaustrittskanals 15 weist typischerweise einen Wert von L/H≥0,01, insbesondere L/H≥0,05, auf.

Ein Verhältnis H/S zwischen der Eintrittshöhe H des Abgasaustrittskanals und des maximalen Radius S des Spinners 2 weist typischerweise einen Wert von H/S≥1,0, insbesondere H/S≥1,3, auf.

Ein Verhältnis M/H zwischen einer axialen Spinner-Segmentlänge M und der Eintrittshöhe H des Abgasaustrittskanals 15 weist typischerweise einen Wert von M/H≥0,01, insbesondere M/H≥0,05, auf.

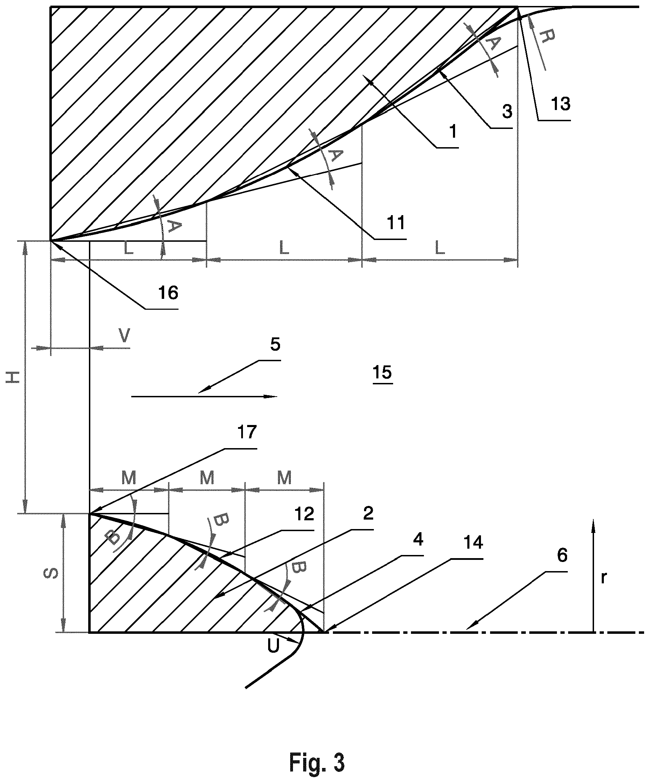

Gemäß einer Ausführungsform die mit anderen hierin beschriebenen Ausführungsformen kombiniert werden kann, kann der Ausgangspunkt 16 der Diffusor-Kontur 3 am Eintritt zum Abgasaustrittskanal im Vergleich zum Ausgangspunkt 17 der Spinner-Kontur 4 einen axialen Versatz V aufweisen, wie es beispielhaft in den Figuren 2 und 3 dargestellt ist. Der axiale Versatz V des Ausgangspunkts 16 der Diffusor-Kontur 3 relativ zum Ausgangspunkt 17 der Spinner-Kontur 4 kann entgegen der Strömungsrichtung 5 vorgesehen sein, wie es beispielhaft in den Figuren 2 und 3 dargestellt ist. Alternativ kann der axiale Versatz V des Ausgangspunkts 16 der Diffusor-Kontur 3 relativ zum Ausgangspunkt 17 der Spinner-Kontur 4 in Strömungsrichtung 5 vorgesehen sein (nicht explizit dargestellt). Insbesondere kann der Versatz V kleiner oder gleich der Hälfte der Eintrittshöhe des Abgasaustrittskanals sein, d.h. V ≤ H/2.

Somit wird vorteilhafterweise eine Abgasturbine mit einem verbesserten Diffusordesign bereitgestellt, welches eine verbesserte Druckrückgewinnung am Abgasturbinenausgang ermöglicht.

Insbesondere wird die Druckrückgewinnung bzw. der Anstieg des statischen Drucks stromabwärts der Abgasturbine durch einen statischen (nicht drehenden) axialen Diffusor und einen rotierenden Spinner am Turbinenradauslass verbessert, wobei sowohl die Diffusor-Kontur als auch die Spinner-Kontur derart ausgelegt sind, dass sich der Austrittsbereich, insbesondere der Abgasaustrittskanal, graduell vergrößert, wodurch vorteilhafterweise eine graduelle Erhöhung des statischen Drucks stromabwärts der Abgasturbine erreicht werden kann. Dies hat den Vorteil, dass die Strömungsgeschwindigkeit am Austritt der Abgasturbine sowie die kinetischen Energieverluste reduziert werden können. Insbesondere hat die erfindungsgemäße Abgasturbine den Vorteil, dass Expansionsverluste, wie sie beispielsweise bei den aus dem Stand der Technik bekannten Abgasturbinen durch unstetige und ungeführte Flächenänderungen im Abgasaustrittsbereich auftreten, eliminiert werden können und die Abgasströmung normalisiert wird. Ferner sei angemerkt, dass sich die in der erfindungsgemäßen Abgasturbine realisierbaren reduzierten Austrittsströmungsgeschwindigkeiten zudem vorteilhafterweise zu einer Reduktion von Druckverlusten in einem nachgeschalteten Rohrleitungssystem führen können.

Figur 3 zeigt eine schematische Schnittansicht eines Abgasaustrittskanals 15 einer Abgasturbine gemäß weiteren hierin beschriebenen Ausführungsformen.

Insbesondere zeigt Figur 3, dass gemäß einer Ausführungsform, die mit anderen hierin beschriebenen Ausführungsformen kombiniert werden kann, die aufeinander folgenden konischen Diffusor-Segmente eine radial nach Innen gerichtete Diffusor-Kontur 3 bereitstellen. Wie beispielhaft in Figur 3 dargestellt ist, kann die radial nach Innen gerichtete Diffusor-Kontur 3 durch eine erste Spline-Kontur 11 geglättet sein. Dadurch kann die Druckrückgewinnung bzw. der Anstieg des statischen Drucks stromabwärts der Abgasturbine am Turbinenradauslass verbessert werden. Beispielsweise kann die erste Spline-Kontur 11 durch eine kreisförmige Kontur mit einem Radius R abgerundet sein, wobei der Radius R kleiner oder gleich der zweifachen Eintrittshöhe H des Abgasaustrittskanals ist (R≤2H).

Des Weiteren zeigt Figur 3, dass gemäß einer Ausführungsform, die mit anderen hierin beschriebenen Ausführungsformen kombiniert werden kann, die aufeinander folgenden konischen Spinner-Segmente eine radial nach Außen gerichtete Spinner-Kontur 4 bereitstellen. Wie beispielhaft in Figur 3 dargestellt ist, kann die radial nach Außen gerichtete Spinner-Kontur 4 durch eine zweite Spline-Kontur 12 geglättet sein. Dadurch kann die Druckrückgewinnung bzw. der Anstieg des statischen Drucks stromabwärts der Abgasturbine am Turbinenradauslass verbessert werden. Beispielsweise kann die zweite Spline-Kontur 12 durch eine kreisförmige Kontur mit einem Radius U abgerundet sein, wobei der Radius U kleiner oder gleich dem maximalen Radius S des Spinners ist (U≤S).

Darüber hinaus zeigt Figur 3, dass gemäß einer Aus führungs form, die mit anderen hierin beschriebenen Ausführungsformen kombiniert werden kann, eine Kante 13 des letzten in Strömungsrichtung 5 angeordneten Diffusor-Segments durch eine kreisförmige Kontur mit einem Radius R abgerundet sein kann. Dies wirkt sich vorteilhaft auf die Druckrückgewinnung aus. Typischerweise ist der Radius R kleiner oder gleich der zweifachen Eintrittshöhe H des Abgasaustrittskanals, d.h. R ≤ 2H.

Des Weiteren zeigt Figur 3, dass gemäß einer Ausführungsform, die mit anderen hierin beschriebenen Ausführungsformen kombiniert werden kann, eine Kante 14 des letzten in Strömungsrichtung 5 angeordneten Spinner-Segments durch eine kreisförmige Kontur mit einem Radius U abgerundet sein kann. Dies wirkt sich vorteilhaft auf die Druckrückgewinnung aus. Typischerweise ist der Radius U kleiner oder gleich dem maximalen Radius S des Spinners, d.h. U ≤ S.

Wie aus den hierin beschriebenen Ausführungsformen hervorgeht wird vorteilhafterweise eine Abgasturbine mit einem Diffusor bereitgestellt, die gegenüber den aus dem Stand der Technik bekannten Abgasturbinen verbessert ist. Insbesondere wird durch die erfindungsgemäße Abgasturbine eine Abgasturbine mit einem verbesserten Diffusordesign bereitgestellt, welches eine verbesserte Druckrückgewinnung am Abgasturbinenausgang ermöglicht.

Vorteilhafterweise ist der Diffusor der erfindungsgemäßen Abgasturbine derart realisiert, dass dieser im Vergleich zu aus dem Stand der Technik bekannten Diffusoren von Abgasturbinen eine geringe Komplexität und Bauraumgrösse aufweist, was sich positiv auf die Herstellungskosten auswirkt.

Abschließend sei angemerkt, dass das hierin beschriebene Design des Diffusors und des Spinners hinsichtlich der geforderten Dimensionierung entsprechend angepasst werden kann. Mit anderen Worten, das hierin beschriebene Design des Diffusors und des Spinners ist allgemein gültig und kann auf kleine, mittlere und große Bauraumgrößen übertragen werden.

### BEZUGZEICHENLISTE

- **1**: axialer Turbinendiffusor
- **2**: Spinner
- **3**: radial nach Innen gerichtete Diffusor-Kontur
- **4**: radial nach Außen gerichtete Spinner-Kontur
- **5**: Strömungsrichtung
- **6**: Rotationsachse sowie Symmetrieachse des Abgasaustrittskanals
- **7**: Turbinenrad
- **8**: Laufschaufeln
- **9**: Vorderkante einer Turbinenlaufschaufel
- **10**: Hinterkante einer Turbinenlaufschaufel
- **11**: erste Spline-Kontur
- **12**: zweite Spline-Kontur
- **13**: Kante des letzten in Strömungsrichtung angeordneten Diffusor-Segments
- **14**: Kante des letzten in Strömungsrichtung angeordneten Spinner-Segments
- **15**: Strömungskanal
- **16**: Ausgangspunkt der Diffusor-Kontur
- **17**: Ausgangspunkt der Spinner-Kontur
- **18**: Verbindungselement
- **19**: Versenkung**r** radiale Richtung
- **H**: Eintrittshöhe des Abgasaustrittskanals
- **S**: maximaler Radius S des Spinners
- **L**: axiale Diffusor-Segmentlänge
- **A**: axialer Diffusor-Öffnungswinkel
- **N**: Anzahl von aufeinander folgenden konischen Diffusor-Segmenten
- **R**: Abrundungsradius der Kante des letzten in Strömungsrichtung angeordneten Diffusor-Segments bzw. der ersten Spline-Kontur
- **M**: axiale Spinner-Segmentlänge
- **B**: Spinner-Öffnungswinkel
- **P**: Anzahl von aufeinander folgenden konischen Spinner-Segmenten
- **U**: Abrundungsradius der Kante des letzten in Strömungsrichtung angeordneten Spinner-Segments bzw. der zweiten Spline-Kontur
- **V**: axialer Versatz

## Patentansprüche

1. Abgasturbine, umfassend:
- ein Turbinenrad (7) mit einer Vielzahl von Laufschaufeln (8),
- einen Abgasaustrittskanal (15), welcher stromabwärts der Laufschaufeln des Turbinenrades angeordnet ist, wobei der Abgasaustrittskanal (15) radial außen durch einen axialen Turbinendiffusor (1) und radial innen, zumindest teilweise durch einen Spinner (2) begrenzt ist,
wobei der axiale Turbinendiffusor (1) aus einer Anzahl N>1 von aufeinander folgenden konischen Diffusor-Segmenten ausgebildet ist,
wobei ein axialer Diffusor-Öffnungswinkel A zwischen aufeinander folgenden Diffusor-Segmenten A≥1,0° beträgt,
wobei ein Verhältnis L/H zwischen einer axialen Diffusor-Segmentlänge L und einer Eintrittshöhe H des Abgasaustrittskanals (15) L/H≥0,01 beträgt,
wobei ein Verhältnis H/S zwischen der Eintrittshöhe H des Abgasaustrittskanals und einem maximalen Radius S des Spinners (2) H/S≥1,0 beträgt,
wobei der Spinner (2) aus einer Anzahl P>1 von aufeinander folgenden konischen Spinner-Segmenten ausgebildet ist,
wobei ein axialer Spinner-Öffnungswinkel B zwischen aufeinander folgenden Spinner-Segmenten B≥1,0° beträgt, und
wobei ein Verhältnis M/H zwischen einer axialen Spinner-Segmentlänge M und der Eintrittshöhe H des Abgasaustrittskanals (15) M/H≥0,01 beträgt.

2. Abgasturbine nach Anspruch 1, wobei der axiale Turbinendiffusor (1) statisch ausgeführt ist, und wobei der Spinner rotierbar ausgeführt ist.

3. Abgasturbine nach Anspruch 1 oder 2, wobei die aufeinander folgenden konischen Diffusor-Segmente eine radiale nach Innen gerichtete Diffusor-Kontur (3) bereitstellen, und wobei die aufeinander folgenden konischen Spinner-Segmente eine radiale nach Außen gerichtete Diffusor-Kontur (4) bereitstellen.

4. Abgasturbine nach Anspruch 3, wobei ein Ausgangspunkt (16) der Diffusor-Kontur (3) relativ zu einem Ausgangspunkt (17) der Spinner-Kontur (4) einen axialen Versatz V aufweist, insbesondere wobei der axiale Versatz kleiner oder gleich der Hälfte der Eintrittshöhe H des Abgasaustrittskanals ist (V ≤ H/2).

5. Abgasturbine nach Anspruch 4, wobei der axiale Versatz V des Ausgangspunkts (16) der Diffusor-Kontur (3) relativ zum Ausgangspunkt (17) der Spinner-Kontur (4) entgegen der Strömungsrichtung (5) vorgesehen ist, oder wobei der axiale Versatz V des Ausgangspunkts (16) der Diffusor-Kontur (3) relativ zum Ausgangspunkt (17) der Spinner-Kontur (4) in der Strömungsrichtung 5 vorgesehen ist.

6. Abgasturbine nach einem der Ansprüche 1 bis 5, wobei eine Kante (13) des letzten in Strömungsrichtung (5) angeordneten Diffusor-Segments durch eine kreisförmige Kontur mit einem Radius R abgerundet ist, wobei der Radius R kleiner oder gleich der zweifachen Eintrittshöhe H des Abgasaustrittskanals ist (R≤2H).

7. Abgasturbine nach einem der Ansprüche 1 bis 6, wobei eine Kante (14) des letzten in Strömungsrichtung (5) angeordneten Spinner-Segments durch eine kreisförmige Kontur mit einem Radius U abgerundet ist, wobei der Radius U kleiner oder gleich dem maximalen Radius S des Spinners ist (U≤S).

8. Abgasturbine nach einem der Ansprüche 3 bis 5, wobei die radial nach Innen gerichtete Diffusor-Kontur (3) durch eine erste Spline-Kontur (11) geglättet ist.

9. Abgasturbine nach einem der Ansprüche 3 bis 5 oder 8, wobei die radiale nach Außen gerichtete Spinner-Kontur (4) durch eine zweite Spline-Kontur (12) geglättet ist.

10. Abgasturbine nach Anspruch 8, wobei die erste Spline-Kontur (11) durch eine kreisförmige Kontur mit einem Radius R abgerundet ist, wobei der Radius R kleiner oder gleich der zweifachen Eintrittshöhe H des Abgasaustrittskanals ist (R≤2H).

11. Abgasturbine nach Anspruch 9 oder 10, wobei die zweite Spline-Kontur (12) durch eine kreisförmige Kontur mit einem Radius U abgerundet ist, wobei der Radius U kleiner oder gleich dem maximalen Radius S des Spinners ist (U≤S).

12. Abgasturbolader mit einer Abgasturbine gemäß einem der Ansprüche 1 bis 11.

## Claims

1. Exhaust gas turbine, comprising:
- a turbine wheel (7) having a multiplicity of moving blades (8),
- an exhaust-gas outlet duct (15), which is arranged downstream of the moving blades of the turbine wheel, wherein the exhaust-gas outlet duct (15) is delimited radially on the outside by an axial turbine diffuser (1) and radially on the inside, at least partially, by a spinner (2),
wherein the axial turbine diffuser (1) is formed by a number N>1 of successive conical diffuser segments, wherein an axial diffuser opening angle A between successive diffuser segments is A≥1.0° ,
wherein a ratio L/H between an axial diffuser segment length L and an entry height H of the exhaust-gas outlet duct (15) is L/H≥0.01,
wherein a ratio H/S between the entry height H of the exhaust-gas outlet duct and a maximum radius S of the spinner (2) is H/S≥1.0,
wherein the spinner (2) is formed by a number P>1 of successive conical spinner segments,
wherein an axial spinner opening angle B between successive spinner segments is B≥1.0°, and
wherein a ratio M/H between an axial spinner segment length M and the entry height H of the exhaust-gas outlet duct (15) is M/H≥0.01.

2. Exhaust gas turbine according to Claim 1, wherein the axial turbine diffuser (1) is of static design, and wherein the spinner is of rotatable design.

3. Exhaust gas turbine according to Claim 1 or 2, wherein the successive conical diffuser segments provide a radially inward-oriented diffuser contour (3), and wherein the successive conical spinner segments provide a radially outward-oriented diffuser contour (4).

4. Exhaust gas turbine according to Claim 3, wherein a starting point (16) of the diffuser contour (3) has an axial offset V relative to a starting point (17) of the spinner contour (4), in particular wherein the axial offset is smaller than or equal to half the entry height H of the exhaust-gas outlet duct (V ≤ H/2).

5. Exhaust gas turbine according to Claim 4, wherein the axial offset V of the starting point (16) of the diffuser contour (3) relative to the starting point (17) of the spinner contour (4) is provided counter to the direction of flow (5), or wherein the axial offset V of the starting point (16) of the diffuser contour (3) relative to the starting point (17) of the spinner contour (4) is provided in the direction of flow 5.

6. Exhaust gas turbine according to any one of Claims 1 to 5, wherein an edge (13) of the last diffuser segment arranged in the direction of flow (5) is rounded by means of a circular contour with a radius R, wherein the radius R is smaller than or equal to twice the entry height H of the exhaust-gas outlet duct (R≤2H).

7. Exhaust gas turbine according to any one of Claims 1 to 6, wherein an edge (14) of the last spinner segment arranged in the direction of flow (5) is rounded by means of a circular contour with a radius U, wherein the radius U is smaller than or equal to the maximum radius S of the spinner (U≤S) .

8. Exhaust gas turbine according to any one of Claims 3 to 5, wherein the radially inward-oriented diffuser contour (3) is smoothed by a first spline contour (11).

9. Exhaust gas turbine according to any one of Claims 3 to 5 or 8, wherein the radially outward-oriented spinner contour (4) is smoothed by a second spline contour (12) .

10. Exhaust gas turbine according to Claim 8, wherein the first spline contour (11) is rounded by means of a circular contour with a radius R, wherein the radius R is smaller than or equal to twice the entry height H of the exhaust-gas outlet duct (R≤2H).

11. Exhaust gas turbine according to Claim 9 or 10, wherein the second spline contour (12) is rounded by means of a circular contour with a radius U, wherein the radius U is smaller than or equal to the maximum radius S of the spinner (U≤S) .

12. Exhaust gas turbocharger having an exhaust gas turbine according to any one of Claims 1 to 11.

## Revendications

1. Turbine à gaz d'échappement, comportant :
- une roue de turbine (7) pourvue d'une pluralité de pales (8),
- un canal de sortie des gaz d'échappement (15), lequel est agencé en aval des pales de la roue de turbine, le canal de sortie des gaz d'échappement (15) étant délimité radialement à l'extérieur par un diffuseur de turbine axial (1) et radialement à l'intérieur au moins en partie par un nez de rotor (2),
dans laquelle le diffuseur de turbine axial (1) est formé d'un nombre N > 1 de segments coniques successifs de diffuseur,
dans laquelle un angle d'ouverture de diffuseur axial A entre des segments successifs de diffuseur est A ≥ 1,0°, dans laquelle un rapport L/H entre une longueur L de segment de diffuseur axial et une hauteur d'entrée H du canal de sortie des gaz d'échappement (15) est L/H ≥ 0,01,
dans laquelle un rapport H/S entre la hauteur d'entrée H du canal de sortie des gaz d'échappement et un rayon maximal S du nez de rotor (2) est H/S ≥ 1,0,
dans laquelle le nez de rotor (2) est formé d'un nombre P > 1 de segments coniques successifs de nez de rotor, dans laquelle un angle d'ouverture de nez de rotor axial B entre des segments successifs de nez de rotor est B ≥ 1,0°, et
dans laquelle un rapport M/H entre une longueur M de segment de nez de rotor axial et la hauteur d'entrée H du canal de sortie des gaz d'échappement (15) est M/H ≥ 0,01.

2. Turbine à gaz d'échappement selon la revendication 1, dans laquelle le diffuseur de turbine axial (1) est réalisé sous forme statique, et dans laquelle le nez de rotor est réalisé sous forme rotative.

3. Turbine à gaz d'échappement selon la revendication 1 ou 2, dans laquelle les segments coniques successifs de diffuseur fournissent un contour de diffuseur (3) orienté radialement vers l'intérieur, et dans laquelle les segments coniques successifs de nez de rotor fournissent un contour de diffuseur (4) orienté radialement vers l'extérieur.

4. Turbine à gaz d'échappement selon la revendication 3, dans laquelle un point de départ (16) du contour de diffuseur (3) présente un décalage axial V par rapport à un point de départ (17) du contour de nez de rotor (4), notamment dans laquelle le décalage axial est inférieur ou égal à la moitié de la hauteur d'entrée H du canal de sortie des gaz d'échappement (V ≤ H/2).

5. Turbine à gaz d'échappement selon la revendication 4, dans laquelle le décalage axial V du point de départ (16) du contour de diffuseur (3) par rapport au point de départ (17) du contour de nez de rotor (4) est prévu à l'encontre de la direction d'écoulement (5), ou dans laquelle le décalage axial V du point de départ (16) du contour de diffuseur (3) par rapport au point de départ (17) du contour de nez de rotor (4) est prévu dans la direction d'écoulement (5).

6. Turbine à gaz d'échappement selon l'une quelconque des revendications 1 à 5, dans laquelle un bord (13) du dernier segment de diffuseur agencé dans la direction d'écoulement (5) est arrondi par un contour circulaire ayant un rayon R, le rayon R étant inférieur ou égal à deux fois la hauteur d'entrée H du canal de sortie des gaz d'échappement (R ≤ 2H).

7. Turbine à gaz d'échappement selon l'une quelconque des revendications 1 à 6, dans laquelle un bord (14) du dernier segment de nez de rotor agencé dans la direction d'écoulement (5) est arrondi par un contour circulaire ayant un rayon U, le rayon U étant inférieur ou égal au rayon maximal S du nez de rotor (U ≤ S) .

8. Turbine à gaz d'échappement selon l'une quelconque des revendications 3 à 5, dans laquelle le contour de diffuseur (3) orienté radialement vers l'intérieur est lissé par un premier contour de cannelure (11).

9. Turbine à gaz d'échappement selon l'une quelconque des revendications 3 à 5 ou 8, dans laquelle le contour de nez de rotor (4) orienté radialement vers l'extérieur est lissé par un deuxième contour de cannelure (12).

10. Turbine à gaz d'échappement selon la revendication 8, dans laquelle le premier contour de cannelure (11) est arrondi par un contour circulaire ayant un rayon R, le rayon R étant inférieur ou égal à deux fois la hauteur d'entrée H du canal de sortie des gaz d'échappement (R ≤ 2H) .

11. Turbine à gaz d'échappement selon la revendication 9 ou 10, dans laquelle le deuxième contour de cannelure (12) est arrondi par un contour circulaire ayant un rayon U, le rayon U étant inférieur ou égal au rayon maximal S du nez de rotor (U ≤ S).

12. Turbocompresseur à gaz d'échappement pourvu d'une turbine à gaz d'échappement selon l'une quelconque des revendications 1 à 11.
